(19) Europäisches Patentamt
European Patent Office
Office européen des brevets

(11) **EP 3 743 993 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **19701801.3**

(22) Anmeldetag: **17.01.2019**

(51) Internationale Patentklassifikation (IPC):
**H02P 6/182** (2016.01) **H02P 6/18** (2016.01)

(52) Gemeinsame Patentklassifikation (CPC):
**H02P 6/182; H02P 6/18**

(86) Internationale Anmeldenummer:
**PCT/EP2019/051153**

(87) Internationale Veröffentlichungsnummer:
**WO 2019/145215 (01.08.2019 Gazette 2019/31)**

(54) **VERFAHREN ZUM BETREIBEN EINES ELEKTRONISCH KOMMUTIERTEN ELEKTROMOTORS**

METHOD FOR OPERATING AN ELECTRONICALLY COMMUTATED ELECTRIC MOTOR

PROCÉDÉ PERMETTANT DE FAIRE FONCTIONNER UN MOTEUR ÉLECTRIQUE À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2018 DE 102018201212**

(43) Veröffentlichungstag der Anmeldung:
**02.12.2020 Patentblatt 2020/49**

(73) Patentinhaber: **Robert Bosch GmbH 70442 Stuttgart (DE)**

(72) Erfinder:
• **MAIER, Christian**
**70435 Stuttgart (DE)**
• **BECKER, Michael**
**76135 Karlsruhe (DE)**

(56) Entgegenhaltungen:
**EP-A2- 2 159 911       DE-A1-102012 222 494**
**US-A1- 2008 297 078    US-A1- 2014 145 654**

**Beschreibung**

Stand der Technik

Die vorliegende Erfindung betrifft ein Verfahren zum Betreiben eines elektronisch kommutierten Elektromotors, z.B. eines bürstenlosen Gleichstrommotors. Ein solcher bürstenloser Gleichstrommotor wird auch BLDC-Motor (Brushless DC-Motor) genannt. Elektronisch kommutierte Elektromotoren umfassen Statorwicklungen mit mehreren Phasen, an die elektrische Spannungen anlegbar sind, um einen Rotor anzutreiben. Für ein Antreiben des Rotors mit einem optimalen Wirkungsgrad ist es notwendig, eine Kommutierung des elektronisch kommutierten Elektromotors optimal zu steuern. Dies wird durch das erfindungsgemäße Verfahren erreicht. Außerdem betrifft die Erfindung ein Computerprogramm und ein Speichermedium zum Speichern des Computerprogramms. Schließlich betrifft die Erfindung ein System, umfassend einen elektronisch kommutierten Elektromotor und eine Steuereinheit zum Durchführen eines derartigen Verfahrens.

Aus dem Stand der Technik sind elektronisch kommutierte Elektromotoren bekannt. Bei solchen Motoren wird eine elektronische Kommutierung durchgeführt, da auf Schleifringe und Bürsten verzichtet wird. Für eine derartige Kommutierung ist eine genaue Information über eine aktuelle Rotorlage erforderlich. Dies kann beispielsweise durch eine Messung der Rotorlage mittels Hall-Sensoren erfolgen. Allerdings ist das Anbringen von solchen Sensoren nicht in jedem Anwendungsfall möglich, weswegen auch sensorlose Kommutierungen, wobei auf Rotorlagensensoren verzichtet wird, durchgeführt werden. Hierbei wird anhand einer Gegenspannung, die von dem Rotor in der Statorwicklung erzeugt wird, auf die Rotorlage geschlossen.

Üblicherweise erfolgt die Drehmoment-Regelung eines BLDC-Motors durch ein Kommutierungsverfahren, welches in einem dq-System beschrieben ist und damit zunächst von der Rotorlage-Information unabhängig ist. Die dq-Darstellung bietet den Vorteil, dass der Stromzeiger $i_q$ den drehmomentbildenden Anteil des Stromes darstellt, während $i_d$ die magnetische Erregung beeinflusst. Man kann zeigen, dass der BLDC-Wirkungsgrad dann optimal ist, wenn $i_d$ minimal und der Winkelfehler $\Delta\varphi = 0$ ist. Die erforderlichen Spannungen $d_{u,q}$ werden nachfolgend durch eine inverse Park-Transformation $P^{-1}$ (nachfolgend dargestellt) auf die Phasenspannungen $u_{u;v;w}$ umgerechnet.

$$\begin{bmatrix} u_u \\ u_v \\ u_w \end{bmatrix} = P^{-1}(\varphi)\begin{bmatrix} u_d \\ u_q \end{bmatrix} \qquad P^{-1}(\varphi) = \begin{bmatrix} \cos(\varphi) & -\sin(\varphi) \\ \cos\left(\varphi - \dfrac{2\pi}{3}\right) & -\sin\left(\varphi - \dfrac{2\pi}{3}\right) \\ \cos\left(\varphi - \dfrac{4\pi}{3}\right) & -\sin\left(\varphi - \dfrac{4\pi}{3}\right) \end{bmatrix}$$

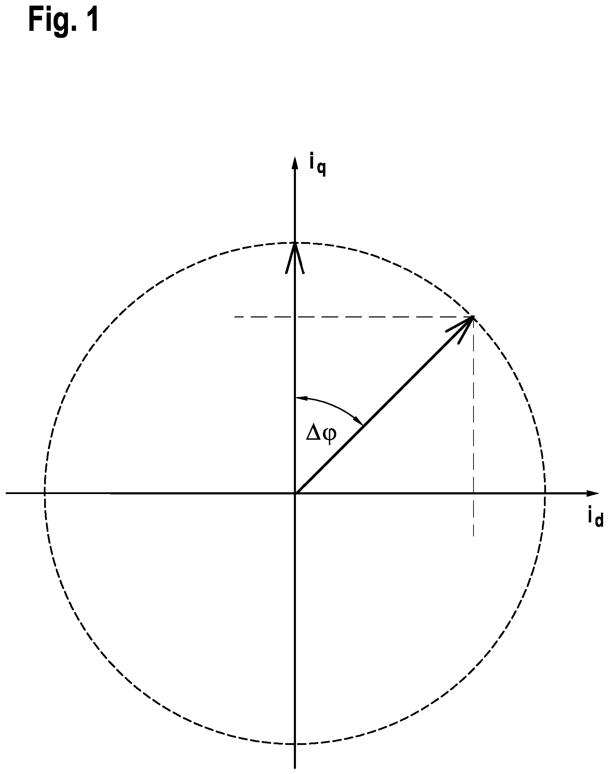

Da die inverse Park-Transformation von der (elektrischen) Rotorlage abhängt, ist deren genaue Kenntnis elementar zur wirkungsgradoptimalen Ansteuerung eines elektronisch kommutierten Elektromotors ist. Figur 1 zeigt beispielhaft eine graphische Repräsentation eines dq-Systems. Es ist ersichtlich, dass der Stromzeiger bei einer Differenz zwischen tatsächlicher Rotorposition und einer geschätzten Rotorposition $\Delta\varphi = \varphi_{Rotor} - \hat{\varphi}$ nicht korrekt auf die dq-Achsen projiziert wird. Dies hat zur Folge, dass der Wirkungsgrad geringer wird bzw. weniger Drehmoment $T_{ist}$ gestellt werden kann, als durch den Regler $T_{soll}$ gefordert wird.

$$T_{ist} \propto T_{soll} \cdot \cos(\Delta\varphi)$$

$$\eta \propto \eta_{opt} \cdot \cos(\Delta\varphi)$$

Aus diesem Grund wird für gewöhnlich mittels eines Sensors direkt an der Motorwelle die Rotorlage bestimmt, um so Kommutierungsfehler klein zu halten. Ist es aufgrund der Rahmenbedingungen jedoch nicht möglich direkt an der Welle zu messen, sondern zum Beispiel an einem Ausgang eines von dem Elektromotor angetriebenen Getriebes, so entstehen Winkelfehler die je nach berücksichtigter Steifigkeit des Getriebes zusätzlich lastabhängig sind. Verstärkt wird der Winkelfehler zusätzlich noch, wenn die Polpaarzahl p des elektronisch kommutierten Elektromotors von eins abweicht.

$$\Delta\varphi = \left(\varphi_{Rotor} - \hat{\varphi}\right)\cdot p$$

Aus der DE 10 2014 210 930 A1 ist ein Verfahren zum Betreiben eines elektronisch kommutierten Motors bekannt.

Aus der US 2008/297078 A1 ist eine Motorsteuervorrichtung für den Betrieb eines permanentmagneterregten Synchronmotors bekannt. Für das Kommutieren des Motors sind neben einem Winkelsensor auch ein

Summenstrom (DC-) Stromsensor auch zwei Stromsensoren für eine Phasenstrommessung vorhanden. Für eine bessere Kommutierung wird zu dem gemessenen Rotorwinkel ein Korrekturwinkel hinzuaddiert, wobei der Korrekturwinkel in Abhängigkeit von gewissen erfassten Strömen in +/-1°-Schritten verändert wird.

US 2008/297078 A1 offenbart ein Verfahren zum Betreiben eines elektronisch kommutierten Elektromotors, wobei eine elektronische Kommutierung basierend auf einem bereitgestellten Schätzwert einer Winkelposition eines Rotors des elektronisch kommutierten Elektromotors ausgeführt wird, umfassend die Schritte:

- Vertrimmen des Schätzwerts durch Aufbringen einer Überlagerungsgröße auf den Schätzwert, sodass die elektronische Kommutierung basierend auf einem vertrimmten Schätzwert ausgeführt wird,
- Ermitteln einer Veränderung eines durch eine Wicklung eines Stators des elektronisch kommutierten Elektromotors fließenden elektrischen Summenstroms während eines Betriebs des elektronisch kommutierten Elektromotors mit der Kommutierung basierend auf dem vertrimmten Schätzwert,
- Ermitteln eines Korrekturwerts des Schätzwertes basierend auf der Veränderung des Stroms,
- Anpassen des Schätzwerts unter Verwendung des Korrekturwerts.

Aus der US 2014/145654 A1 ist eine Vorrichtung zur Messung einer Positionsabweisung eines Rotors eines permanentmagneterregten Synchronmotors bekannt.

Aus der DE 10 2012 222494 A1 sind ein System und Verfahren zum Kalibrieren eines Offsets eines Motordrehmelders bekannt.

Aus der EP 2 159 911 A2 ist eine Motorsteuerung für einen bürstenlosen Gleichstrommotor bekannt.

Offenbarung der Erfindung

Die Erfindung ermöglicht es, den Winkelfehler zwischen geschätzter und tatsächlicher Rotorlage zu minimieren, insbesondere beim Betreiben eines elektronisch kommutierten Elektromotors, z.B. eines bürstenlosen Gleichstrommotors oder einer permanent oder elektrisch erregten Synchronmaschine, etc. Ein solcher Motor weist z.B. einen Stator und einen Rotor auf, wobei der Rotor z.B. Permanentmagnete aufweisen kann und der Stator Statorwicklungen aufweisen kann, die elektrisch bestromt bzw. kommutiert werden können.

Die Minimierung des Winkelfehlers erfolgt insbesondere dann, wenn kein Sensor zur Erfassung der Rotorlage vorhanden ist und die Kommutierung somit sensorlos erfolgt. Das sensorlose Kommutieren bedeutet, dass lediglich kein Positionssensor vorhanden ist. Andere Sensoren, wie insbesondere Stromsensoren oder Spannungssensoren, sind zum Erfassen von elektronischen Parametern des elektronisch kommutierten Elektromotors vorgesehen. Durch das Verringern des Winkelfehlers kann die Kommutierungsgüte verbessert werden, was zu einem höheren Wirkungsgrad des elektronisch kommutierten Elektromotors führt, wodurch höhere Drehmomente des Motors bei gleich großen elektrischen Strömen ermöglicht sind. Ein weiterer Vorteil der Erfindung ist außerdem, dass jede Ursache von Winkelfehlern kompensiert werden kann.

Erfindungsgemäß ist vorgesehen, dass ein Schätzwert einer Winkelposition eines Rotors des elektronisch kommutierten Elektromotors bereitgestellt wird. Das Bereitstellen von Schätzwerten der Winkelposition ist aus dem Stand der Technik bekannt und kann insbesondere anhand einer induzierten Gegenspannung erfolgen. Hierzu wird beispielsweise ermittelt, welche Gegenspannung durch den Rotor in den Statorwicklungen induziert wurde. Anhand dieser Spannung lässt sich die Rotorlage abschätzen.

Erfindungsgemäß ist vorgesehen, dass die folgenden Schritte durchgeführt werden: Zunächst erfolgt ein Vertrimmen des Schätzwerts durch Aufbringen einer Überlagerungsgröße auf den Schätzwert. Die sensorlose elektronische Kommutierung wird dann basierend auf dem vertrimmten Schätzwert ausgeführt. Anschließend erfolgt das Ermitteln einer Veränderung eines durch eine Wicklung eines Stators des elektronisch kommutierten Elektromotors fließenden elektrischen Summenstroms während eines Betriebs des elektronisch kommutierten Elektromotors mit der Kommutierung basierend auf dem vertrimmten Schätzwert. Durch die Vertrimmung des Schätzwertes bestehen zwei Möglichkeiten: Es kann entweder die Kommutierung optimiert oder verschlechtert werden. Unter einer optimierten Kommutierung ist hierbei eine Kommutierung zu verstehen, bei welcher der Wirkungsgrad des elektrisch kommutierten Elektromotors verbessert wird. Wird der Schätzwert durch die Vertrimmung näher an den tatsächlichen Wert der aktuellen Rotorlage gebracht, so wird die Kommutierung optimiert, d.h.: der Wirkungsgrad steigt. Wird hingegen ein Abstand zwischen Schätzwert und tatsächlicher Rotorlage durch die Vertrimmung vergrößert, so wird die Kommutierung verschlechtert, d.h. der Wirkungsgrad sinkt. Dies führt dazu, dass entweder ein geringerer Summenstrom fließt, insbesondere im Fall der Verbesserung der Kommutierung, oder ein erhöhter Summenstrom fließt, insbesondere im Fall einer Verschlechterung der Kommutierung. Diese Veränderung kann, beispielsweise mittels eines Stromsensors, erfasst und ermittelt werden. Anschließend erfolgt außerdem ein Ermitteln eines Korrekturwerts des Schätzwerts, basierend auf der Veränderung des Stroms. So kann insbesondere der Schätzwert dann korrigiert werden, wenn nach dem Aufbringen der Überlagerungsgröße der Summenstrom absinkt. Wobei die Überlagerungsgröße ein Dithersignal ist, wobei das Dithersignal ein Signal ist, das, insbesondere gleichmäßig, um einen vordefinierten Wert pendelt.

In diesem Fall wurde der Schätzwert durch die Vertrimmung näher an den tatsächlichen Wert herangebracht, wodurch der Schätzwert in Richtung der Vertrimmung zu korrigieren ist. Gleichermaßen kann insbesondere auch im Falle eines steigenden Summenstroms eine Korrektur entgegen der Vertrimmung erfolgen. Zuletzt erfolgt das Anpassen des Schätzwerts unter Verwendung des Korrekturwerts.

Die genannten Schritte werden insbesondere in der beschriebenen Reihenfolge und wiederholend durchgeführt. Somit wird insbesondere ein Gradientenverfahren durchgeführt, um die aktuelle Rotorlage des elektronisch kommutierten Elektromotors optimal zu bestimmen. Durch das wiederholte Ausführen dieser Bestimmung ist ermöglicht, den Schätzwert bei laufendem Betrieb des elektronisch kommutierten Elektromotors an die tatsächliche Position anzunähern, um als Ergebnis ein hochgenaues Ermitteln der aktuellen Rotorlage zu ermöglichen. Werden die Schritte wiederholt ausgeführt, so ist insbesondere vorgesehen, dass sich die Überlagerungsgröße ändert. Insbesondere ändert sich die Überlagerungsgröße bei jedem erneuten Ausführen der Schritte. Beispielsweise kann sich eine Amplitude der Überlagerungsgröße ändern, insbesondere in Abhängigkeit eines Abstands zwischen Schätzwert und tatsächlichem Wert der Rotorlage.

Die Unteransprüche haben bevorzugte Weiterbildungen der Erfindung zum Inhalt.

Bevorzugt ist vorgesehen, dass das Anpassen des Schätzwerts durch Addition des Korrekturwerts erfolgt. Dabei wird ein Vorzeichen des Korrekturwerts aus den Vorzeichen der Überlagerungsgröße und einer Summenstromänderung bestimmt, insbesondere aus dem negierten Vorzeichen des Produkts aus der Überlagerungsgröße und aus einer durch die Überlagerungsgröße hervorgerufenen Summenstromänderung.

Das Vorzeichen der Überlagerungsgröße bestimmt sich daraus, ob die Überlagerungsgröße den Schätzwert vergrößert (Vorzeichen ist positiv) oder verkleinert (Vorzeichen ist negativ). Das Vorzeichen der Summenstromänderung bestimmt sich daraus, ob aufgrund der Veränderung des Schätzwerts durch die Überlagerungsgröße beim Vertrimmen der Summenstrom absinkt (Vorzeichen ist negativ) oder ansteigt (Vorzeichen ist positiv). Insbesondere wird lediglich eine solche Veränderung des Summenstroms betrachtet, die durch die Überlagerungsgröße hervorgerufen wurde. Dies lässt sich insbesondere durch eine partielle Ableitung des Summenstroms nach der Überlagerungsgröße erreichen. Das Vorzeichen des Korrekturwerts entspricht somit insbesondere dem negierten Vorzeichen des Produkts aus der Überlagerungsgröße und aus der durch die Überlagerungsgröße hervorgerufenen Summenstromänderung. Dies bedeutet, dass sich die folgenden vier Fälle ergeben können:

Fall 1:  Der Schätzwert wird durch den Korrekturwert verringert, wenn die Überlagerungsgröße den Schätzwert verringert und der Summenstrom absinkt. Denn in diesem Fall führt die Absenkung des Schätzwerts auf den vertrimmten Schätzwert zu einer Verbesserung des Wirkungsgrades (verringerter Summenstrom) - damit war der Schätzwert relativ zum Optimalwert ursprünglich zu hoch und wird durch die Verringerung näher an den Optimalwert herangeführt. Der Korrekturwert, der zum Schätzwert zu addieren ist muss also kleiner als Null sein (negatives Vorzeichen).

Fall 2:  Der Schätzwert wird durch den Korrekturwert vergrößert, wenn die Überlagerungsgröße den Schätzwert vergrößert und der Summenstrom absinkt. In diesem Fall führt die Erhöhung des Schätzwerts auf den vertrimmten Schätzwert zu einer Verbesserung des Wirkungsgrades (verringerter Summenstrom) - damit war der Schätzwert relativ zum Optimalwert ursprünglich zu niedrig und wird durch die Erhöhung näher an den Optimalwert herangeführt. Der Korrekturwert, der zum Schätzwert zu addieren ist muss also größer als Null sein (positives Vorzeichen).

Fall 3:  Der Schätzwert wird durch den Korrekturwert verringert, wenn die Überlagerungsgröße den Schätzwert vergrößert und der Summenstrom ansteigt. Denn in diesem Fall führt die Absenkung des Schätzwerts auf den vertrimmten Schätzwert zu einer Verschlechterung des Wirkungsgrades (erhöhter Summenstrom) - damit war der Schätzwert relativ zum Optimalwert zu hoch und wird durch die positive Überlagerungsgröße noch weiter weg vom Optimalwert geführt. Der Korrekturwert, der zum Schätzwert zu addieren ist muss also kleiner als Null sein (negatives Vorzeichen).

Fall 4:  Der Schätzwert wird durch den Korrekturwert erhöht, wenn die Überlagerungsgröße den Schätzwert verringert und der Summenstrom ansteigt. Denn in diesem Fall führt die Verringerung des Schätzwerts auf den vertrimmten Schätzwert zu einer Verschlechterung des Wirkungsgrades (erhöhter Summenstrom) - damit war der Schätzwert relativ zum Optimalwert zu niedrig und wird durch die negative Überlagerungsgröße noch weiter weg vom Optimalwert geführt. Der Korrekturwert, der zum Schätzwert zu addieren ist muss also kleiner als Null sein (negatives Vorzeichen).

Diese vier Fälle lassen sich somit einfach und aufwandsarm durch die Betrachtung der Vorzeichen von Überlagerungsgröße und Summenstromänderung abdecken. Im Rahmen dieser Erfindung wird die Änderung des Summenstroms, die, insbesondere allein, durch die Überlagerungsgröße hervorgerufen wird, als Summenstromüberlagerung bezeichnet.

In einer bevorzugten Ausführungsform ist vorgesehen, dass der Korrekturwert anhand einer Regelabweichung bestimmt wird. Die Regelabweichung wird aus einem Mittelwert eines Produkts aus der Überlagerungsgröße und dem negierten Ergebnis einer Vorzeichenfunktion, die auf die Summenstromüberlagerung angewandt wurde, berechnet. Dieser Mittelwert wird insbesondere über eine Periodendauer der Überlagerungsgröße ermittelt. So ist insbesondere der Betrag der Summenstromüberlagerung für die weitere Betrachtung nicht relevant. Es ist lediglich relevant, ob die Summenstromüberlagerung positiv oder negativ ist, das bedeutet, ob der Summenstrom ansteigt oder absinkt. Daher wird die Vorzeichenfunktion signum (sign) auf den Summenstrom angewandt, so dass das Ergebnis entweder +1 oder -1 oder 0 ist. Dieser Wert wird mit der Überlagerungsgröße multipliziert, um so die zuvor beschriebene Vorzeichenbetrachtung zu erfüllen. Insbesondere werden, wie zuvor beschrieben, die eingangs beschriebenen Schritte mehrfach durchgeführt. Somit stehen mehrerer solcher Multiplikationen zur Verfügung, so dass ein Mittelwert gebildet werden kann. Dieser Mittelwert gibt daher an, in welcher Richtung und mit welcher Größenordnung der Schätzwert von der tatsächlichen Rotorlage abweicht. Somit kann basierend auf dieser Regelabweichung der Korrekturwert ermittelt werden. Es ist ersichtlich, dass mit zunehmender Betriebsdauer des elektronisch kommutierten Elektromotors der Schätzwert genauer an den tatsächlichen Wert der Rotorlage angleicht. In diesem Fall wird die Regelabweichung gegen 0 tendieren. Sobald die Regelabweichung minimiert ist, ist eine optimale Kommutierung erreicht, das bedeutet, der elektronisch kommutierte Elektromotor wird mit einem maximierten Wirkungsgrad betrieben.

Vorteilhafterweise wird der Korrekturwert mittels eines Störgrößenreglers berechnet. Das Berechnen des Korrekturwerts erfolgt aus der Regelabweichung, die zuvor erklärt wurde. Der Störgrößenregler umfasst vorteilhafterweise eine Vorsteuerung, um ein schnelleres Agieren zu ermöglichen. Als Störgrößenregler kann insbesondere ein Regler umfassend ein P-Glied und/oder I-Glied und/oder D-Glied verwendet werden. In dem Störgrößenregler wird der Winkelfehler zwischen Schätzwert und tatsächlichem Winkel der Rotorlage als Störgröße angesehen. Deren Einfluss lässt sich durch die Regelabweichung wie zuvor beschrieben beschreiben. Der Störgrößenregler kann somit mit bekannten Methoden ausgelegt und an eine konkrete Umsetzung des elektronisch kommutierten Elektromotors angepasst werden.

Der Summenstrom ist insbesondere mittels eines Sensors erfassbar. Somit kann der Summenstrom als Signal erfasst werden. Die Summenstromüberlagerung wird vorteilhafterweise aus dem Summenstrom mittels eines Bandpassfilters bestimmt. Da lediglich diejenige Veränderung des Summenstroms für die Ermittlung der Regelabweichung relevant ist, die aus der Überlagerungsgröße resultiert, wird vorteilhafterweise die Bandpassfilterung derart durchgeführt, dass sämtliche Frequenzen ausgefiltert werden, die nicht einer Frequenz der Änderung der Überlagerungsgröße entsprechen. Daher ist vorteilhafterweise vorgesehen, dass die Überlagerungsgröße fortlaufend verändert wird, um somit die Auswirkungen der Überlagerungsgröße innerhalb der Veränderung des Summenstroms einfach und aufwandsarm identifizieren zu können.

Es ist vorgesehen, dass die Überlagerungsgröße ein Dithersignal ist. Das Dithersignal weist eine Ditherfrequenz auf, die vorteilhafterweise größer ist als eine Resonanzfrequenz des elektronisch kommutierten Elektromotors. Somit ist insbesondere die Überlagerung des Dithersignals mit dem Schätzwert ohne Auswirkungen auf den Betrieb des elektronisch kommutierten Elektromotors. Dadurch kann vorteilhafterweise erreicht werden, dass die Veränderung des Schätzwerts nicht zu negativen Auswirkungen auf den Betrieb des elektronisch kommutierten Elektromotors führt. Insbesondere ist ein Aufschwingen oder ein unerwünschtes Verhalten des Rotors des elektronisch kommutierten Elektromotors aufgrund des Dithersignals vermieden. Dennoch kann vorteilhafterweise anhand der Ditherfrequenz der Einfluss des Dithersignals auf den Summenstrom ermittelt werden. Insbesondere kann anhand des zuvor beschriebenen Bandpassfilters, der auf die Ditherfrequenz ausgelegt ist, aus dem Summenstromsignal diejenige Veränderung herausgefiltert werden, die auf der Beeinflussung durch das Dithersignal basiert. Somit lässt sich insbesondere die zuvor beschriebene Regelabweichung einfach und zuverlässig bestimmen. Außerdem kann somit sicher und zuverlässig ein Anpassen des Schätzwerts erfolgen, um eine optimale Kommutierung durchzuführen. In einer besonders bevorzugten Ausführungsform beträgt die Ditherfrequenz zumindest 50 Hz oder zumindest 80 Hz oder zumindest 100 Hz.

Unter einem Dithersignal wird im Rahmen dieser Erfindung ein Signal verstanden, das, insbesondere gleichmäßig, um einen vordefinierten Wert pendelt. Dieser vordefinierte Wert ist insbesondere der Schätzwert.

Besonders vorteilhaft wird der Summenstrom mit einer Samplefrequenz abgetastet. Die Samplefrequenz ist insbesondere ein ganzzahliges Vielfaches der Frequenz des Dithersignals. Auf diese Weise lässt sich das zuvor beschriebene Verfahren sehr effizient auf digitalen Systemen implementieren. Auf diese Weise kann hochgenau abgetastet werden, welchen Einfluss die Überlagerungsgröße auf den Summenstrom hat. Somit kann sehr genau rückgeschlossen werden, in welcher Art und Weise der Schätzwert zu korrigieren ist, um ein optimales Kommutieren des elektronisch kommutierten Elektromotors zu erreichen. Der Schätzwert kann insbesondere mit der Samplefrequenz korrigiert werden, sodass der zuvor beschriebene Schritt des Anpassens des Schätzwerts bevorzugt mehrmals innerhalb der Periode der Überlagerungsgröße, insbesondere des Dithersignals, erfolgt. Dies führt zu einem schnellen Angleichen des Schätzwerts an die tatsächliche Rotorlage.

Der Schätzwert wird durch die Überlagerungsgröße vorteilhafterweise um einen maximalen Wert von 10° oder um einen maximalen Wert von 5° positiv und/oder negativ vertrimmt. Insbesondere erfolgen eine sprunghafte Veränderung und ein Beibehalten des Werts bis zur nächsten sprunghaften Veränderung, z.B. in Form eines Rechtecksignals. Alternativ erfolgt eine kontinuierliche Veränderung der Überlagerungsgröße, so dass der Schätzwert fortlaufend um einen Wert vertrimmt wird, z.B. in Form eines Sinussignals. In allen Fällen ist bevorzugt vorgesehen, dass der Wert zwischen innerhalb eines Bereichs von -10° und +10°, alternativ innerhalb eines Bereichs zwischen -5° und +5° verbleibt. Somit ist insbesondere erreicht, dass eine ausreichend große Änderung des Summenstroms auftreten kann, die sicher und zuverlässig erfassbar ist, während gleichzeitig der Einfluss auf den Betrieb des elektronisch kommutierten Elektromotors minimiert ist.

Die Überlagerungsgröße weist ein bezüglich des Schätzwerts mittelwertfreies Rechtecksignal auf. Dies bedeutet, dass der Mittelwert der Überlagerungsgröße Null ist, wodurch der Schätzwert im Mittel nicht verändert wird. Dies wird insbesondere dadurch erreicht, dass der Schätzwert jeweils gleichmäßig um denselben Wert erhöht und verringert wird. Somit wird über eine Periode des Rechtecksignals der Schätzwert im Mittel nicht verändert. Durch das Vergrößern und Verringern des Schätzwerts innerhalb einer Periode des Rechtecksignals kann jedoch ermittelt werden, welche Auswirkungen das Erhöhen und Verringern des Schätzwerts auf den Summenstrom hat. Darauf basierend lässt sich insbesondere die zuvor beschriebene Regelabweichung bestimmen, um eine passende Größe für den Korrekturwert zu bestimmen. Daher lässt sich erreichen, den Schätzwert sicher und zuverlässig an den tatsächlichen Wert der Rotorlage anzugleichen, ohne dass während des Durchführens des zuvor beschriebenen Verfahrens eine negative Auswirkung auf den Betrieb des Elektromotors auftritt oder besagte negative Auswirkungen zumindest minimiert sind.

Die Erfindung betrifft außerdem ein Computerprogramm.

Außerdem betrifft die Erfindung ein computerlesbares Speichermedium. Das Speichermedium dient zum Speichern des Computerprogramms. Das Speichermedium kann insbesondere der Speicher eines Steuergeräts sein. Alternativ kann das Speichermedium auch ein optischer oder magnetischer Datenträger oder ein Flash-Speicher sein.

Schließlich betrifft die Erfindung ein System, umfassend einen elektronisch kommutierten Elektromotor. Der elektronisch kommutierte Elektromotor umfasst einen Rotor und einen Stator sowie eine Steuereinheit. Dabei ist vorgesehen, dass die Steuereinheit ausgebildet ist, das Verfahren wie zuvor beschrieben auszuführen. Alternativ oder zusätzlich ist die Steuereinheit ausgebildet, das Computerprogramm wie zuvor beschrieben auszuführen. Somit kann die Steuervorrichtung eine optimale Kommutierung des elektronisch kommutierten Elektromotors vornehmen, wodurch der elektronisch kommutierte Elektromotor wirkungsgradoptimiert betrieben wird. Insbesondere ist hierzu kein hochpreisiger Lagesensor zum ermitteln einer Lage des Rotors des Elektromotors notwendig. Somit ist der Elektromotor einfacher und kostengünstiger aufbaubar, insbesondere ist ein Bauraum des Elektromotors reduziert.

Kurze Beschreibung der Zeichnung

Nachfolgend wird ein Ausführungsbeispiel der Erfindung unter Bezugnahme auf die begleitende Zeichnung im Detail beschrieben. In der Zeichnung zeigt:

Figur 1        eine schematische Darstellung eines dq-Systems;

Figur 2        eine schematische Abbildung eines Ablaufs des Verfahrens gemäß einem Ausführungsbeispiel der Erfindung; und

Figur 3a, 3b   eine Darstellung des zeitlichen Verlaufs einer Überlagerungsgröße, der sich daraus ergebenden Summenstromüberlagerung und des Korrekturwerts für zwei verschiedene Fälle.

Ausführungsform der Erfindung

Figur 1 zeigt schematisch eine graphische Repräsentation eines dq-Systems, das eingangs bereits beschrieben wurde.

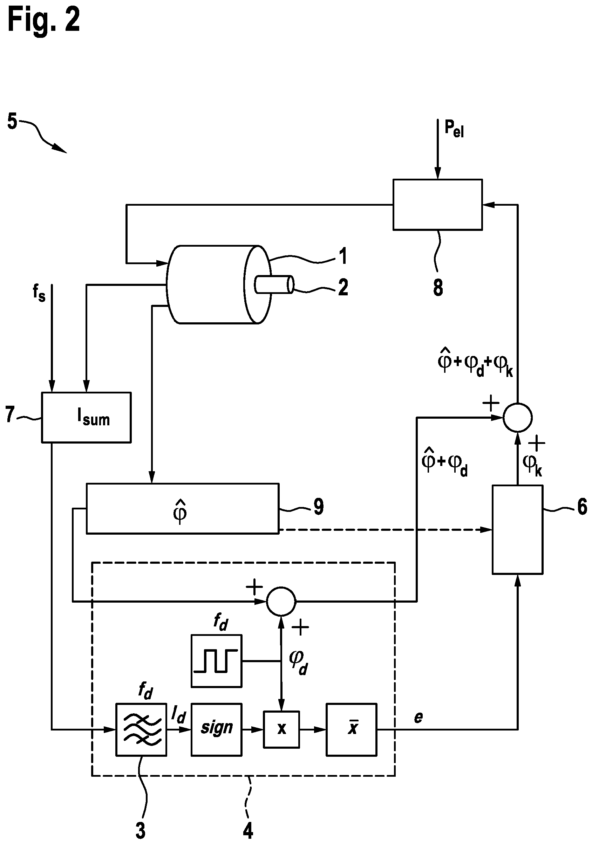

Figur 2 zeigt schematisch den Ablauf eines Verfahrens gemäß einem Ausführungsbeispiel der Erfindung. Dazu ist schematisch ein elektronisch kommutierter Elektromotor 1, der insbesondere ein bürstenloser Gleichstrommotor ist, gezeigt, der einen Rotor 2 sowie einen nicht gezeigten Stator aufweist. Der Rotor 2 ist durch seine Rotorwelle dargestellt. Der grundsätzliche Aufbau des elektronisch kommutierten Elektromotors 1 entspricht dem Stand der Technik. So weist der Stator mehrere Statorwicklungen auf, während der Rotor 2 vorteilhafterweise Permanentmagnete aufweist. Wird an die Wicklungen des Stators eine entsprechende Spannung angelegt, so lässt sich ein magnetisches Drehfeld erzeugen, durch das der Rotor 2 rotiert wird. Hierzu ist insbesondere vorgesehen, dass drei Phasen realisiert sind, die sich unabhängig voneinander ansteuern lassen. An die einzelnen Phasen lassen sich entsprechende elektrische Spannungen anlegen, um das magnetische Drehfeld zu erzeugen. Es ist eine elektrische Kommutierung notwendig, mit der eingestellt wird, welche Spannung an welche Phase anzulegen ist. Allerdings ist hierzu das Wissen über eine konkrete Lage des Rotors 2 notwendig.

Die Lage des Rotors 2 wird als Winkelwert bestimmt. Somit kann die Rotorlage des Rotors 2 insbesondere einen Wert zwischen 0° und 360° aufweisen. Die Ausrichtung des Rotors 2 an der Position 0° und an der Position 360° ist identisch. Die Rotorlage des Rotors 2 wird in dem beschriebenen Ausführungsbeispiel nicht anhand eines kostenintensiven Positionssensors ermittelt. Vielmehr wird eine Rotorlage mittels eines Schätzwerts $\hat{\varphi}$ angenähert.

Die Figur 2 zeigt ein gesamtes System 5, umfassend den elektronisch kommutierten Elektromotor 1 sowie eine Steuereinheit 4, die ein Verfahren gemäß einem Ausführungsbeispiel der Erfindung ausführt. Neben der Steuereinheit 4 sind weitere Komponenten vorgesehen, die Hilfsschritte für das Verfahren ausführen.

So wird der Schätzwert $\hat{\varphi}$ in diesem Ausführungsbeispiel von einer Schätzvorrichtung 9 bestimmt. Die Schätzvorrichtung 9 schätzt in diesem Ausführungsbeispiel, lediglich beispielhaft, die Rotorlage des Rotors 2 anhand einer durch den Rotor 2 induzierten Gegenspannung in der Statorwicklung ab.

Sowohl der Schätzwert $\hat{\varphi}$ von der Schätzvorrichtung 9 als auch der Summenstrom $I_{sum}$ von dem Stromsensor 7 werden an die Steuereinheit 4 übergeben. Die Steuereinheit 4 arbeitet nach dem folgenden Grundprinzip: Es wird untersucht, wie sich eine bekannte Vertrimmung des Schätzwerts $\hat{\varphi}$ durch eine Überlagerungsgröße $\varphi_d$ in dem Summenstrom $I_{sum}$ auswirkt. Gelingt es, den infolge eines geringeren Wirkungsgrad erhöhten Summenstrom $I_{sum}$ der Vertrimmung zuzuordnen, kann dies zur Korrektur des Schätzwerts $\hat{\varphi}$ genutzt werden. Daher ist vorgesehen, dass die Steuereinheit 4 ein Dithersignal generiert, das eine Überlagerungsgröße $\varphi_d$ mit einer Ditherfrequenz $f_d$ erzeugt. Diese Überlagerungsgröße $\varphi_d$ wird auf den Schätzwert $\hat{\varphi}$ aufsummiert und aus der Steuereinheit 4 ausgegeben.

Das Dithersignal ist insbesondere ein mittelwertfreies Rechtecksignal. Wird dieses Dithersignal auf den Schätzwert $\hat{\varphi}$ aufgebracht, so erfolgt im Mittel keine Veränderung des Schätzwerts $\hat{\varphi}$. Beispielsweise wird der Schätzwert $\hat{\varphi}$ zunächst für einen ersten Zeitraum um einen Wert von 10° oder 5° vergrößert, anschließend (ausgehend von dem ursprünglichen Wert) für einen zweiten Zeitraum um 10° oder 5° verringert. Erster Zeitraum und zweiter Zeitraum sind gleich lang. Dies führt dazu, dass über die Summe aus erstem Zeitraum und zweitem Zeitraum ein Mittelwert des veränderten Schätzwerts $\hat{\varphi}$ unverändert bleibt. Die Summe aus erstem Zeitraum und zweitem Zeitraum stellt die Periode des Dithersignals dar.

Der so vertrimmte Schätzwert $\hat{\varphi}+\varphi_d$ wird an eine Leistungselektronik 8 ausgegeben, der eine elektrische Leistung $P_{el}$ entsprechend dem vertrimmten Schätzwert $\hat{\varphi}+\varphi_d$ auf die einzelnen Phasen der Statorwicklung aufbringt, um so eine Kommutierung gemäß dem vertrimmten Schätzwert $\hat{\varphi}+\varphi_d$ durchzuführen. Es ist somit eine weitere Aufgabe der Steuereinheit 4, die Auswirkungen dieser Vertrimmung auf den Summenstrom $I_{sum}$ zu ermitteln. Dazu wird der Summenstrom $I_{sum}$ mit einem Bandpassfilter 3 gefiltert. Der Bandpassfilter weist eine Mittenfrequenz auf, die der Ditherfrequenz $f_d$ entspricht. Somit lässt sich derjenige Einfluss der Veränderung des Summenstroms $I_{sum}$ ermitteln, der aus der Vertrimmung des Schätzwerts $\hat{\varphi}$ resultiert. Dieser Wert wird auch Summenstromüberlagerung $I_d$ bezeichnet. Insbesondere entspricht das Filtern des Summenstroms $I_{sum}$ mit dem Bandpassfilter 3 einer partiellen Ableitung des Summenstroms $I_{sum}$ nach der Überlagerungsgröße $\varphi_d$. Anhand der Summenstromüberlagerung $I_d$ kann ermittelt werden, welchen Einfluss die Überlagerungsgröße $\varphi_d$ auf den Betrieb des elektronisch kommutierten Elektromotors 1 hat: Wird der Schätzwert $\hat{\varphi}$ durch die Überlagerungsgröße $\varphi_d$ vergrößert und die Summenstromüberlagerung $I_d$ ist negativ, so ist der (unvertrimmte) Schätzwert $\hat{\varphi}$ zu gering - denn der Wirkungsgrad hat sich ja durch Anwendung der Überlagerungsgröße $\varphi_d$ erhöht.

Wird der Schätzwert $\hat{\varphi}$ durch die Überlagerungsgröße $\varphi_d$ verringert und die Summenstromüberlagerung $I_d$ ist negativ (Wirkungsgrad steigt), so ist der Schätzwert $\hat{\varphi}$ zu groß gewählt.

Wird hingegen eine positive Summenstromüberlagerung $I_d$ festgestellt (der Wirkungsgrad sinkt also) und der Schätzwert $\hat{\varphi}$ wird durch die Überlagerungsgröße $\varphi_d$ vergrößert, so ist der Schätzwert $\hat{\varphi}$ zu groß eingestellt.

Wird eine positive Summenstromüberlagerung $I_d$ festgestellt (Wirkungsgrad sinkt) und der Schätzwert $\hat{\varphi}$ durch die Überlagerungsgröße $\varphi_d$ verringert, so ist der Schätzwert $\hat{\varphi}$ zu gering eingestellt.

Somit ist ersichtlich, dass das Resultat, in welche Richtung der Schätzwert $\hat{\varphi}$ zu korrigieren ist, von dem Vorzeichen der Summenstromüberlagerung $I_d$ abhängt. Es wird daher die Vorzeichenfunktion *sign* auf die Summenstromüberlagerung $I_d$ angewandt, da der Betrag der Summenstromüberlagerung $I_d$ für das weitere Vorgehen nicht notwendig ist. Allerdings ist die Überlagerungsgröße $\varphi_d$ selbst ein Maß dafür, um welche Größenordnung der Schätzwert $\hat{\varphi}$ zu korrigieren ist. Es erfolgt daher eine Multiplikation des Ergebnisses der auf die Summenstromüberlagerung $I_d$ angewendeten Vorzeichenfunktion *sign* mit der Überlagerungsgröße $\varphi_d$, um die Regelabweichung e zu ermitteln. Durch die auf die Summenstromüberlagerung $I_d$ angewendete Vorzeichenfunktion *sign* wird insbesondere sichergestellt, dass die Multiplikation mit der Überlagerungsgröße $\varphi_d$ zu einer konstanten Signalstärke führt. Dies vereinfacht die Auslegung eines Störgrößenreglers 6, der nachfolgend beschrieben wird. Das Vorzeichen eines zum Schätzwert $\hat{\varphi}$ zu addierenden

Korrekturwerts $\varphi_k$ kann somit durch den Term $-\text{sign}(I_d) \times \text{sign}(\varphi_d)$ bestimmt werden.

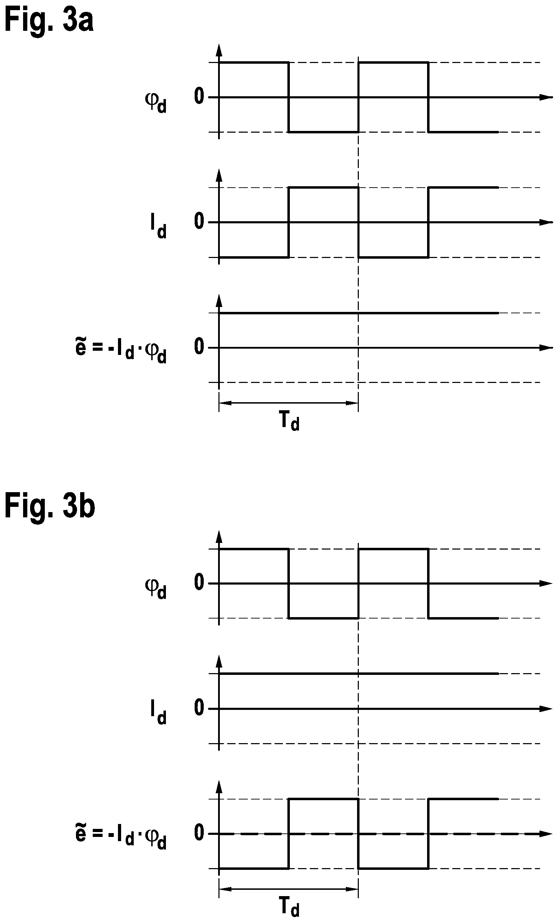

Das Abtasten des Summenstroms $I_{sum}$ erfolgt insbesondere mit einer Sample-Frequenz $f_s$. Die Sample-Frequenz $f_s$ ist vorteilhafterweise ein ganzzahliges Vielfaches von der Ditherfrequenz $f_d$. Somit kann ein gleitender Mittelwert der Multiplikation der auf die Summenstromüberlagerung $I_d$ angewendeten negierten Vorzeichenfunktion $sign$ und der Überlagerungsgröße $\varphi_d$ als die Regelabweichung e ermittelt werden. Insbesondere wird der Mittelwert über eine Periode des Dithersignals bestimmt. Dabei ist z.B. vorgesehen, dass das Dithersignal ein mittelwertfreies Rechtecksignal ist. Somit wird über die Periode $T_d$ (siehe Fig. 3) des Dithersignals der Schätzwert $\hat{\varphi}$ im Mittel nicht verändert. Dadurch sind negative Einflüsse auf den Betrieb des elektronisch kommutierten Elektromotors 1 minimiert. Gleichzeitig wird durch die höhere Sample-Frequenz $f_s$ sichergestellt, dass die einzelnen Veränderungen während der Periode des Dithersignals erfasst werden, um Rückschlüsse auf eine mögliche Korrektur des Schätzwerts $\hat{\varphi}$ zu ziehen.

Die Ditherfrequenz $f_d$ ist vorteilhafterweise größer als eine Resonanzfrequenz des elektronisch kommutierten Elektromotors 1. Insbesondere ist aufgrund der gewählten Ditherfrequenz $f_d$ eine Reaktion des mechanischen Systems des elektronisch kommutierten Elektromotors 1 nicht möglich, oder zumindest stark eingeschränkt, so dass negative Einflüsse des Dithersignals auf den elektronisch kommutierten Elektromotor 1 minimiert oder völlig vermieden sind. Durch das Dithersignal erfolgt insbesondere eine Veränderung des Schätzwerts $\hat{\varphi}$ um max. 10°, insbesondere um max. 5°. Dies bedeutet, dass die Überlagerungsgröße $\varphi_d$ mit der Ditherfrequenz $f_d$ zwischen -10° und +10°, insbesondere zwischen -5° und +5°, variiert wird. Wie zuvor bereits beschrieben, handelt es sich bei dem Dithersignal bevorzugt um ein mittelwertfreies Rechtecksignal, so dass die Überlagerungsgröße $\varphi_d$ jeweils über die halbe Periode des Dithersignals den Wert von -10°, insbesondere von -5°, und von +10°, insbesondere von +5°, aufweist. Grundsätzlich können auch andere Werte innerhalb des Bereichs -10° / +10° verwendet werden, z.B. +8° / -8°. Die Ditherfrequenz $f_d$ beträgt hierbei bevorzugt zumindest 50 Hz, insbesondere zumindest 80 Hz, besonders vorteilhaft zumindest 100 Hz.

Ein Winkelfehler $\Delta\varphi$ zwischen dem Schätzwert $\hat{\varphi}$ und dem realen Wert der Rotorlage des Rotors 2 kann als eine Störgröße einer Regelstrecke angesehen werden. Diese Störgröße bedingt die Regelabweichung e, so dass durch einen Störgrößenregler 6 ein Korrekturwert $\varphi_k$ ermittelt werden kann, um diese Störgröße zu minimieren. Der Korrekturwert $\varphi_k$ wird auf den Schätzwert $\hat{\varphi}$ aufaddiert, um so den Schätzwert $\hat{\varphi}$ zu korrigieren. Bei dem Störgrößenregler 6 kann es sich insbesondere um einen PID-Regler handeln, alternativ um einen Regler, der aus einer beliebigen Kombination aus P-Glied und/oder I-Glied und/oder D-Glied zusammengesetzt ist. Der Störgrößenregler 6 kann außerdem eine entsprechende Vorsteuerung aufweisen. Die Auslegung eines solchen Störgrößenreglers zum Minimieren der Regelabweichung e ist aus dem Stand der Technik bekannt und wird nicht näher beschrieben. Insbesondere kann durch korrekte Ermittlung des Korrekturwerts $\varphi_k$ die Regelabweichung e auf Null reduziert werden.

Es kann somit erreicht werden, den Schätzwert $\hat{\varphi}$, der mittels der Schätzvorrichtung 9 geschätzt wird, sicher und zuverlässig zu optimieren, um einen Winkelfehler $\Delta\varphi$ zwischen dem Schätzwert $\hat{\varphi}$ und der tatsächlichen Lage des Rotors 2 zu minimieren. Dadurch kann eine zuverlässige und genaue Kommutierung durchgeführt werden, was zu einem optimalen Betreiben des elektronisch kommutierten Elektromotors 1 führt. Dies bedeutet, dass ein Wirkungsgrad des elektronisch kommutierten Elektromotors optimiert ist. Somit kann ein maximales Drehmoment bei gleichzeitig minimalem Summenstrom erzeugt werden.

Figur 3 zeigt schematisch beispielhafte Verläufe der Überlagerungsgröße $\varphi_d$ sowie der Summenstromüberlagerung $I_d$. Außerdem ist beispielhaft ein resultierendes Signal $\tilde{e}$ als negiertes Produkt aus Überlagerungsgröße $\varphi_d$ und Summenstromüberlagerung $I_d$ dargestellt. In Figur 3a ist eine Situation mit einem Winkelfehler $\Delta\varphi$ kleiner als 0 gezeigt, während Figur 3b eine Situation darstellt, in der der Winkelfehler $\Delta\varphi$ = 0 ist. Beide Diagramme erstrecken sich über jeweils zwei Perioden $T_d$ der Überlagerungsgröße $\varphi_d$.

In Figur 3a ist der Fall gezeigt, dass der Schätzwert $\hat{\varphi}$ zu klein gewählt ist. Dies führt dazu, dass bei Vergrößerung des Schätzwerts $\hat{\varphi}$ über die halbe Periode $T_d$ der Überlagerungsgröße $\varphi_d$ die Summenstromüberlagerung $I_d$ aufgrund der verbesserten Kommutierung absinkt. Die Kommutierung ist verbessert, da der vertrimmte Schätzwert $\hat{\varphi}+\varphi_d$ aufgrund des zu kleinen Schätzwerts $\hat{\varphi}$ näher an dem Winkel der tatsächlichen Rotorlage liegt. Ein gegenteiliger Effekt lässt sich über die andere halbe Periode $T_d$ der Überlagerungsgröße $\varphi_d$ beobachten. Hier wird der ohnehin zu geringe Schätzwert $\hat{\varphi}$ durch die Überlagerungsgröße $\varphi_d$ weiter verkleinert, sodass sich eine positive Summenstromüberlagerung $I_d$ einstellt. Dies deutet daraufhin, dass die Kommutierung durch die negative Vertrimmung des Schätzwerts $\hat{\varphi}$ verschlechtert wurde, sodass der Wirkungsgrad absinkt und ein höherer Summenstroms $I_{sum}$ benötigt wird.

Wird das resultierende Signal $\tilde{e}$ als negiertes Produkt aus Überlagerungsgröße $\varphi_d$ und Summenstromüberlagerung $I_d$ berechnet, so zeigt das resultierende Signal $\tilde{e}$ an, wie der Schätzwert $\hat{\varphi}$ zu korrigieren ist. In dem in Figur 3a gezeigten Beispiel ist der Schätzwert $\hat{\varphi}$ zu erhöhen, weshalb das resultierende Signal $\tilde{e}$ hier einen positiven konstanten Wert einnimmt. Es kann somit abgelesen werden, dass der Schätzwert $\hat{\varphi}$ vergrößert werden muss, wobei der konstanten Wert des resultierenden Signals $\tilde{e}$ als Maß für die Erhöhung des Schätzwerts $\hat{\varphi}$ dienen kann.

In Figur 3b ist der Fall dargestellt, in dem der Schätzwert $\hat{\varphi}$ mit dem tatsächlichen Winkel der Rotorlage übereinstimmt. Dies ist daran zu erkennen, dass jegliche Vertrimmung des Schätzwerts $\hat{\varphi}$ zu einer Vergrößerung Summenstromüberlagerung $I_d$ der führt. Dies rührt daher, dass jede Abweichung von dem bereits optimalen Schätzwert $\hat{\varphi}$ eine Verschlechterung der Kommutierung bewirkt, sodass der Wirkungsgrad abfällt.

Das resultierende Signal $\tilde{e}$ als negiertes Produkt aus Überlagerungsgröße $\varphi_d$ und Summenstromüberlagerung $I_d$ zeigt erneut an, wie der Schätzwert $\hat{\varphi}$ zu korrigieren ist während der Anwendung der Überlagerungsgröße $\varphi_d$. Als resultierendes Signal $\tilde{e}$ ergibt sich daher ein Signal mit derselben Periode $T_d$ wie die Überlagerungsgröße $\varphi_d$. Das resultierende Signal $\tilde{e}$ ist jedoch invers zu der Überlagerungsgröße $\varphi_d$. Denn wenn ausgehend von dem optimalen Schätzwert der Schätzwert $\varphi_d$ vergrößert wird so muss der Schätzwert $\varphi_d$ wieder zurück korrigiert werden. Wenn ausgehend von dem optimalen Schätzwert der Schätzwert $\varphi_d$ verkleinert wird so muss der Schätzwert $\varphi_d$ bei der Korrektur vergrößert werden. Über eine Periodendauer $T_d$ ist somit das resultierende Signal $\tilde{e}$ wie die Überlagerungsgröße $\varphi_d$ mittelwertfrei, sodass sich als Mittelwert 0 (Null) ergibt.

Es ist somit aus Figur 3a und 3b ersichtlich, dass der Mittelwert des resultierenden Signals $\tilde{e}$ als Maß für eine notwendige Veränderung des Schätzwerts $\hat{\varphi}$ dient, um eine optimale Kommutierung zu erreichen.

**Patentansprüche**

1. Verfahren zum Betreiben eines elektronisch kommutierten Elektromotors (1), wobei eine sensorlose elektronische Kommutierung basierend auf einem bereitgestellten Schätzwert ($\hat{\varphi}$) einer Winkelposition eines Rotors (2) des elektronisch kommutierten Elektromotors (1) ausgeführt wird, umfassend die Schritte:

   • Vertrimmen des Schätzwerts ($\hat{\varphi}$) durch Aufbringen einer Überlagerungsgröße ($\varphi_d$) auf den Schätzwert ($\hat{\varphi}$), sodass die sensorlose elektronische Kommutierung basierend auf einem vertrimmten Schätzwert ($\hat{\varphi}+\varphi_d$) ausgeführt wird,
   • Ermitteln einer Veränderung eines durch eine Wicklung eines Stators des elektronisch kommutierten Elektromotors (1) fließenden elektrischen Summenstroms ($I_{sum}$) während eines Betriebs des elektronisch kommutierten Elektromotors (1) mit der Kommutierung basierend auf dem vertrimmten Schätzwert ($\hat{\varphi}+\varphi_d$),
   • Ermitteln eines Korrekturwerts ($\varphi_k$) des Schätzwertes ($\hat{\varphi}$) basierend auf der Veränderung des Stroms,
   • Anpassen des Schätzwerts ($\hat{\varphi}$) unter Verwendung des Korrekturwerts ($\varphi_k$),

   wobei die Überlagerungsgröße ($\varphi_d$) ein Dithersignal ist,
   wobei das Dithersignal ein Signal ist, das, insbesondere gleichmäßig, um einen vordefinierten Wert pendelt.

2. Verfahren nach Anspruch 1, **dadurch gekennzeichnet, dass** das Anpassen des Schätzwerts ($\hat{\varphi}$) durch Addition des Korrekturwerts ($\varphi_k$) erfolgt, wobei ein Vorzeichen des Korrekturwerts ($\varphi_k$) dem negierten Vorzeichen des Produkts aus der Überlagerungsgröße ($\varphi_d$) und aus einer durch die Überlagerungsgröße ($\varphi_d$) hervorgerufenen Summenstromüberlagerung ($I_d$) bestimmt wird,
   wobei die Summenstromüberlagerung ($I_d$) eine Änderung des Summenstroms ($I_{sum}$) ist, die, insbesondere allein, durch die Überlagerungsgröße ($\varphi_d$) hervorgerufen wird.

3. Verfahren nach Anspruch 2, **dadurch gekennzeichnet, dass** der Korrekturwert ($\varphi_k$) anhand einer Regelabweichung (e) bestimmt wird, die aus einem Mittelwert, insbesondere über eine Periodendauer der Überlagerungsgröße ($\varphi_d$), eines Produkts aus der Überlagerungsgröße ($\varphi_d$) und dem negierten Ergebnis einer Vorzeichenfunktion (*sign*), die auf die Summenstromüberlagerung ($I_d$) angewandt wurde, berechnet wird.

4. Verfahren nach Anspruch 3, **dadurch gekennzeichnet, dass** der Korrekturwert ($\varphi_k$) mittels eines Störgrößenreglers, bevorzugt mit einer Vorsteuerung, aus der Regelabweichung (e) berechnet wird.

5. Verfahren nach einem der vorhergehenden Ansprüche, **dadurch gekennzeichnet, dass** die Summenstromüberlagerung ($I_d$) aus dem Summenstrom ($I_{sum}$) mittels eines Bandpassfilter (3) bestimmt wird.

6. Verfahren nach einem der vorhergehenden Ansprüche, **dadurch gekennzeichnet, dass** das Dithersignal eine Ditherfrequenz ($f_d$) aufweist, die größer ist als eine Resonanzfrequenz ($f_m$) des elektronisch kommutierten Elektromotors (1) und die insbesondere zumindest 50 Hz oder zumindest 80 Hz oder zumindest 100 Hz beträgt.

7. Verfahren nach Anspruch 6, **dadurch gekennzeichnet, dass** das der Summenstrom ($I_{sum}$) mit einer Samplefrequenz ($f_s$) abgetastet wird, die ein ganzzahliges Vielfaches der Frequenz des Dithersignals ist.

8. Verfahren nach einem der vorhergehenden Ansprüche, **dadurch gekennzeichnet, dass** der Schätzwert ($\hat{\varphi}$) durch die Überlagerungsgröße ($\varphi_d$) um einen maximalen Wert von 10° oder um einen maximalen Wert von 5° positiv und/oder negativ vertrimmt wird.

**9.** Verfahren nach einem der vorhergehenden Ansprüche, **dadurch gekennzeichnet, dass** die Überlagerungsgröße ($\varphi_d$) ein bezüglich des Schätzwerts ($\hat{\varphi}$) mittelwertfreies Rechtecksignal ist.

**10.** Computerprogramm, umfassend Befehle, die bei der Ausführung des Programms durch einen Computer diesen veranlassen, das Verfahren nach einem der vorhergehenden Ansprüche auszuführen.

**11.** Computerlesbares Speichermedium, auf dem das Computerprogramm nach Anspruch 10 gespeichert ist.

**12.** System (5) umfassend

- einen elektronisch kommutierten Elektromotor (1) mit einem Rotor (2) und einem Stator und
- eine Steuereinheit (4),

wobei die Steuereinheit (4) ausgebildet ist, das Verfahren gemäß einem der Ansprüche 1 bis 9 oder ein Computerprogramm gemäß Anspruch 10 auszuführen.

**Claims**

**1.** Method for operating an electronically commutated electric motor (1), wherein sensorless electronic commutation is carried out on the basis of a provided estimated value ($\hat{\varphi}$) of an angular position of a rotor (2) of the electronically commutated electric motor (1), comprising the steps of:

- trimming the estimated value ($\hat{\varphi}$) by applying a superimposition variable ($\varphi_d$) to the estimated value ($\hat{\varphi}$), with the result that the sensorless electronic commutation is carried out on the basis of a trimmed estimated value ($\hat{\varphi}+\varphi_d$),
- determining a change in an electrical sum current ($I_{sum}$) flowing through a winding of a stator of the electronically commutated electric motor (1) during operation of the electronically commutated electric motor (1) with the commutation based on the trimmed estimated value ($\hat{\varphi}+\varphi_d$),
- determining a correction value ($\varphi_k$) for the estimated value ($\hat{\varphi}$) on the basis of the change in the current,
- adapting the estimated value ($\hat{\varphi}$) using the correction value ($\varphi_k$),

wherein the superimposition variable ($\varphi_d$) is a dither signal,
wherein the dither signal is a signal which oscillates, in particular uniformly, around a predefined value.

**2.** Method according to Claim 1, **characterized in that** the estimated value ($\hat{\varphi}$) is adapted by adding the correction value ($\varphi_k$), wherein a sign of the correction value ($\varphi_k$) is determined from the negated sign of the product of the superimposition variable ($\varphi_d$) and a sum current superimposition ($I_d$) caused by the superimposition variable ($\varphi_d$), wherein the sum current superimposition ($I_d$) is a change in the sum current ($I_{sum}$) which is caused, in particular solely, by the superimposition variable ($\varphi_d$).

**3.** Method according to Claim 2, **characterized in that** the correction value ($\varphi_k$) is determined on the basis of a control deviation (*e*) which is calculated from a mean value, in particular over a period duration of the superimposition variable ($\varphi_d$), of a product of the superimposition variable ($\varphi_d$) and the negated result of a sign function (sign) applied to the sum current superimposition ($I_d$).

**4.** Method according to Claim 3, **characterized in that** the correction value ($\varphi_k$) is calculated from the control deviation (*e*) by means of an interference variable controller, preferably with pilot control.

**5.** Method according to one of the preceding claims, **characterized in that** the sum current superimposition ($I_d$) is determined from the sum current ($I_{sum}$) by means of a bandpass filter (3).

**6.** Method according to one of the preceding claims, **characterized in that** the dither signal has a dither frequency ($f_d$) which is greater than a resonant frequency ($f_m$) of the electronically commutated electric motor (1) and is, in particular, at least 50 Hz or at least 80 Hz or at least 100 Hz.

**7.** Method according to Claim 6, **characterized in that** the sum current ($I_{sum}$) is sampled at a sampling frequency ($f_s$) which is an integer multiple of the frequency of the dither signal.

8. Method according to one of the preceding claims, **characterized in that** the estimated value ($\hat{\varphi}$) is positively and/or negatively trimmed by a maximum value of 10° or by a maximum value of 5° by means of the superimposition variable ($\varphi_d$).

9. Method according to one of the preceding claims, **characterized in that** the superimposition variable ($\varphi_d$) is a square-wave signal which has no mean value with respect to the estimated value ($\hat{\varphi}$).

10. Computer program comprising instructions which, when the program is executed by a computer, cause the latter to carry out the method according to one of the preceding claims.

11. Computer-readable storage medium on which the computer program according to Claim 10 is stored.

12. System (5) comprising

- an electronically commutated electric motor (1) having a rotor (2) and a stator, and
- a control unit (4),

wherein the control unit (4) is designed to carry out the method according to one of Claims 1 to 9 or to execute a computer program according to Claim 10.

**Revendications**

1. Procédé permettant de faire fonctionner un moteur électrique à commutation électronique (1), une commutation électronique sans capteur étant effectuée sur la base d'une valeur estimée ($\hat{\varphi}$) fournie d'une position angulaire d'un rotor (2) du moteur électrique à commutation électronique (1), comprenant les étapes consistant à :

   • ajuster la valeur estimée ($\hat{\varphi}$) par l'application d'une grandeur de superposition ($\varphi_d$) à la valeur estimée ($\hat{\varphi}$) de sorte que la commutation électronique sans capteur soit effectuée sur la base d'une valeur estimée ajustée ($\hat{\varphi}+\varphi_d$),
   • établir une variation d'un courant électrique total ($I_{sum}$) passant à travers un enroulement d'un stator du moteur électrique à commutation électronique (1) pendant un fonctionnement du moteur électrique à commutation électronique (1), la commutation étant basée sur la valeur estimée ajustée ($\hat{\varphi}+\varphi_d$),
   • établir une valeur de correction ($\varphi_k$) de la valeur estimée ($\hat{\varphi}$) sur la base de la variation du courant,
   • adapter la valeur estimée ($\hat{\varphi}$) en utilisant la valeur de correction ($\varphi_k$),

   la valeur de superposition ($\varphi_d$) étant un signal de dither,
   le signal de dither étant un signal qui oscille, en particulier de manière régulière, autour d'une valeur prédéfinie.

2. Procédé selon la revendication 1, **caractérisé en ce que** l'adaptation de la valeur estimée ($\hat{\varphi}$) est effectuée par l'addition de la valeur de correction ($\varphi_k$), un signe de la valeur de correction ($\varphi_k$) étant déterminé à partir du signe inversé du produit de la grandeur de superposition ($\varphi_d$) et d'une superposition de courant total ($I_d$) provoquée par la grandeur de superposition ($\varphi_d$),
   la superposition de courant total ($I_d$) étant une variation du courant total ($I_{sum}$) qui est provoquée, en particulier uniquement, par la grandeur de superposition ($\varphi_d$).

3. Procédé selon la revendication 2, **caractérisé en ce que** la valeur de correction ($\varphi_k$) est déterminée à l'aide d'un écart de régulation (e) qui est calculé à partir d'une moyenne, en particulier sur une durée de période de la grandeur de superposition ($\varphi_d$), d'un produit de la grandeur de superposition ($\varphi_d$) et du résultat inversé d'une fonction de signe (sign) qui a été appliquée à la superposition de courant total ($I_d$).

4. Procédé selon la revendication 3, **caractérisé en ce que** la valeur de correction ($\varphi_k$) est calculée au moyen d'un régulateur de perturbation, de préférence avec une commande pilote, à partir de l'écart de régulation (e).

5. Procédé selon l'une quelconque des revendications précédentes, **caractérisé en ce que** la superposition de courant total ($I_d$) est déterminée à partir du courant total ($I_{sum}$) au moyen d'un filtre passe-bande (3).

6. Procédé selon l'une quelconque des revendications précédentes, **caractérisé en ce que** le signal de dither présente une fréquence de dither ($f_d$) qui est supérieure à une fréquence de résonance ($f_m$) du moteur électrique à commutation électronique (1) et qui est en particulier au moins égale à 50 Hz ou du moins à 80 Hz ou du moins 100 à Hz.

7. Procédé selon la revendication 6, **caractérisé en ce que** le courant total ($I_{sum}$) est échantillonné à une fréquence d'échantillonnage ($f_s$) qui est un multiple entier de la fréquence du signal de dither.

8. Procédé selon l'une quelconque des revendications précédentes, **caractérisé en ce que** la valeur estimée ($\hat{\varphi}$) est ajustée de manière positive et/ou négative par la grandeur de superposition ($\varphi_d$) par une valeur maximale de 10° ou par une valeur maximale de 5°.

9. Procédé selon l'une quelconque des revendications précédentes, **caractérisé en ce que** la grandeur de superposition ($\varphi_d$) est un signal rectangulaire exempt de valeur moyenne par rapport à la valeur estimée ($\hat{\varphi}$).

10. Programme informatique, comprenant des instructions qui, lorsque le programme est exécuté par un ordinateur, font que celui-ci exécute le procédé selon l'une quelconque des revendications précédentes.

11. Support de stockage lisible par ordinateur sur lequel est stocké le programme informatique selon la revendication 10.

12. Système (5), comprenant

   - un moteur électrique à commutation électronique (1) pourvu d'un rotor (2) et d'un stator, et
   - une unité de commande (4),

   l'unité de commande (4) étant réalisée pour exécuter le procédé selon l'une quelconque des revendications 1 à 9 ou un programme informatique selon la revendication 10.

# Fig. 1

# Fig. 2

# Fig. 3a

# Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014210930 A1
- US 2008297078 A1
- US 2014145654 A1
- DE 102012222494 A1
- EP 2159911 A2